# EUROPÄISCHE PATENTSCHRIFT

(11) **EP 3 754 810 B1**
(45) Veröffentlichungstag und Bekanntmachung des Hinweises auf die Patenterteilung: **16.11.2022**
(21) Anmeldenummer: 20176972.6
(22) Anmeldetag: 28.05.2020
(51) Int. Cl.: H02J 9/00

(54) **STROMVERSORGUNGSEINHEIT MIT EINEM GEHÄUSE UND EINEM AUFLADBAREN, ELEKTRISCHEN SPEICHER**
POWER SUPPLY UNIT WITH A HOUSING AND A RECHARGEABLE ELECTRICAL STORAGE DEVICE
UNITÉ D'ALIMENTATION ÉLECTRIQUE DOTÉ D'UN BOÎTIER ET D'UN ACCUMULATEUR ÉLECTRIQUE RECHARGEABLE

(30) Priorität: 17.06.2019 DE 202019103388 U
(43) Veröffentlichungstag der Anmeldung: 23.12.2020
(73) Patentinhaber: Wacker Neuson Produktion GmbH & Co. KG, 85084 Reichertshofen (DE)
(72) Erfinder: Steffen, Michael, 80796 München (DE)
(74) Vertreter: Otten, Roth, Dobler & Partner mbB Patentanwälte

(56) Entgegenhaltungen:
- CN-A- 107 733 050
- US-B2- 9 899 835

## Beschreibung

Die Erfindung betrifft ein transportables Stromversorgungseinheit mit wenigstens einem aufladbaren, elektrischen Speicher zum Speichern von elektrischer Energie und mit einem Gehäuse nach dem Oberbegriff des Anspruchs 1.

### Stand der Technik

Es sind bereits transportable Stromgeneratoren wie Notstromaggregate etc. im Einsatz. Diese sind üblicherweise zur Erzeugung elektrischer Energie vorgesehen, die zum Beispiel bei nicht vorhandenem Stromnetz oder bei Ausfall eines Hauptstromversorgers, z.B. des öffentlichen Netzes, eingesetzt werden. Diese transportablen Stromgeneratoren sind meist mit einem Diesel- oder Ottomotor bestückt, die einen elektrischen Generator antreiben. Der Generator erzeugt dann die Wechselspannung wie z.B. eine Netzspannung mit 230V oder auch einen sog. "Starkstrom" mit 380V. Für den Anschluss eines oder mehrerer Verbraucher sind entsprechende Buchsen bzw. Steckdosen am Gehäuse vorhanden.

Die Druckschrift DE 82 23 987 U aus dem Jahr 1982 betrifft ein transportables Notstromaggregat, das elektrische Akkumulatoren aufweist, die von Solarzellen bzw. PV-Modulen aufgeladen werden.

Darüber hinaus sind auch aus der CN 107 733 050 A und der US 9,899,835 B2 weitere Stromversorgungseinheiten bekannt geworden.

Zwischenzeitlich setzen sich elektrische Geräte u.a. auch im Baugewebe oder dergleichen immer stärker durch. So sind z.B. bereits elektrische Stampfer, Walzen, Motorsägen, Sensen, etc. im Einsatz, die durch elektrische Akkumulatoren versorgt bzw. betrieben werden. Für derartige Großgeräte bzw. größeren Verbraucher ist ein solarbetriebenes Stromaggregat nicht für den Dauereinsatz bzw. mehrstündigen Betrieb z.B. auf einer modernen Baustelle geeignet.

### Aufgabe und Vorteile der Erfindung

Aufgabe der Erfindung ist es demgegenüber, eine transportable Stromversorgungseinheit vorzuschlagen, die wenigstens teilweise die Nachteile des Standes der Technik verbessert, insb. für einen Dauereinsatz eines Verbrauchers geeignet ist.

Diese Aufgabe wird, ausgehend von einer transportablen Stromversorgungseinheit der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße, transportable Stromversorgungseinheit dadurch aus, dass wenigstens eine Kühleinheit zum Kühlen des aufladbaren, elektrischen Speichers vorgesehen ist und dass die Kühleinheit zugleich als Wechselrichter-Kühleinheit zum Kühlen des Wechselrichters ausgebildet ist, wobei die Kühleinheit zugleich als Laderegler-Kühleinheit zum Kühlen des Ladereglers ausgebildet ist, wobei oberhalb des Wechselrichters die Kühleinheit und oberhalb der Kühleinheit der aufladbare, elektrische Speicher angeordnet ist. Hiermit kann eine Effizienzsteigerung sowie Steigerung der Lebensdauer des Speichers und/oder des Ladereglers und/oder des Wechselrichters realisiert werden. Zudem kann eine Doppel-/ Mehrfachnutzung der Kühlung zu einer wirtschaftlich und konstruktiv besonders vorteilhaften Herstellung und Betriebsweise der Stromversorgungseinheit gemäß der Erfindung verwirklicht werden.

Auch ist wenigstens eine (werkzeuglos) lösbar verbindbare Verbindungseinheit für den aufladbaren, elektrischen Speicher vorgesehen, wobei die Verbindungseinheit wenigstens eine elektrische Kontaktvorrichtung zum (werkzeuglos) lösbar verbindbaren Kontaktieren des aufladbaren, elektrischen Speichers und wenigstens eine (werkzeuglos) lösbar verbindbare Haltevorrichtung zum (werkzeuglos) lösbar verbindbaren Halten des aufladbaren, elektrischen Speichers im Gehäuse umfasst.

Mit Hilfe einer derartigen, werkzeuglos lösbar verbindbaren Verbindungseinheit kann nun bei Bedarf ohne großen Aufwand bzw. ohne Werkzeug der aufladbare, elektrische Speicher ausgewechselt werden. Dies eröffnet Möglichkeiten des vorteilhaften Betriebs der transportablen Stromversorgungseinheit. So kann in vorteilhafter Weise ein entladener bzw. fast entladener, erster, elektrischer Speicher ausgewechselt werden, wobei ein anderer bzw. zweiter, geladener elektrischer Speicher mittels der erfindungsgemäßen Verbindungseinheit vorzugsweise werkzeuglos eingebaut bzw. in der Stromversorgungseinheit angeschlossen bzw. mit dieser verbunden werden.

So steht wieder unmittelbar und sehr schnell, d.h. ohne längere Ladezeiten, für einen Verbraucher elektrische Energie mit vorteilhafter Wechsel-Spannung zur Verfügung. Dies ist gerade für einen vergleichsweise langen Einsatz bei größeren Verbrauchern wie z.B. Rüttlern, Stampfern, Walzen etc. auf einer Baustelle oder dergleichen von entscheidendem Vorteil. Beispielsweise können mit mehreren, z.B. ca. 5 oder 10 aufgeladenen, auswechselbaren, elektrischen Speichern eine nahezu unbegrenzte Energieversorgung für Baugeräte oder dergleichen gewährleistet werden. Dies eröffnet gerade im Baugewerbe für leistungsstarke Baugeräte/-maschinen bislang nicht realisierbare Anwendungsmöglichkeiten.

Vorteilhafterweise ist eine elektrische Ladevorrichtung zum Laden des aufladbaren, elektrischen Speichers vorgesehen, wobei die Ladevorrichtung wenigstens einen elektrischen und/oder elektronischen Laderegler zum Kontrollieren eines Ladevorganges des aufladbaren, elektrischen Speichers umfasst, wobei der Laderegler als AC/DC-Wandler zum Umwandeln der ersten Wechselspannung in eine Gleichspannung des aufladbaren, elektrischen Speichers ausgebildet ist, wobei die Anschlusseinheit als Wechselspannungseingang des Ladereglers ausgebildet ist. Hiermit kann der aufladbare, elektrische Speicher nicht nur schnell ausgewechselt, sondern auch in vorteilhafter Weise bei Bedarf bzw. bei genügend Zeit, z.B. über Nacht oder über die Mittagspause, etc., aufgeladen werden. Demzufolge kann auf die Bevorratung bzw. Verwendung von mehreren aufladbaren, elektrischen Speichern verzichtet werden. Dies spart u.a. Investitions-/Kosten.

Vorzugsweise weist die Anschlusseinheit wenigstens einen Netzanschluss für die als Netzspannung, z.B. mit ca. 115V bei 60Hz und/oder einphasige Netzspannung mit ca. 230V bei 50Hz und/oder sog. mehrphasiger "Drehstrom" mit ca. 400V bei 50Hz, ausgebildete, erste Wechselspannung und zudem zumindest einen Niedervoltanschluss, z.B. 24V oder ca. 35 bis 50V wie insb. ca. 42V/48V bei 200Hz, für die als zweite Wechselspannung auf. So können mehrere bzw. verschiedene Verbraucher, insb. von im Baugewerbe gebräuchliche Arbeitsgeräte oder dergleichen, gleichzeitig oder abwechselnd in vorteilhafter Weise mit der transportablen Stromversorgungseinheit gemäß der Erfindung betrieben bzw. mit elektrischer Energie/Spannung versorgt werden.

Vorteilhafterweise umfasst das Gehäuse wenigstens ein Haltegestell zum Halten/Positionieren des aufladbaren, elektrischen Speichers, insb. im/innerhalb des Gehäuses. Dies ermöglicht eine sichere und feste Integration des Speichers während dem Betreib.

Vorzugsweise umfasst die elektrische Kontaktvorrichtung wenigstens eine (werkzeuglose) Steckvorrichtung zum (werkzeuglosen) Anstecken und Anschließen des aufladbaren, elektrischen Speichers. So kann z.B. zugleich mit dem Verbinden des aufladbaren, elektrischen Speichers gemäß der Erfindung ein Anstecken/Kontaktieren realisiert werden. Hiermit wird der konstruktive Aufwand bzw. das Handlich verbessert.

In einer besonderen Weiterbildung der Erfindung umfasst die Steckvorrichtung wenigstens ein Speicher-Anschlusskabel mit einem ersten Anschluss-Stecker oder mit einer ersten Anschluss-Buchse für eine erste Speicher-Buchse oder für einen ersten Speicher-Stecker des aufladbaren, elektrischen Speichers. Hiermit kann das Anstecken/Anschließen des aufladbaren, elektrischen Speichers in vorteilhafter Weise verwirklicht werden. So kann z.B. manuell der aufladbare, elektrische Speicher an das Kabel angeschlossen werden, so dass das Platzieren des aufladbaren, elektrischen Speichers im Gehäuse ohne großen Aufwand erfolgen kann.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: einen schematischen Aufbau einer transportablen Stromversorgungseinheit gemäß der Erfindung im Generatorbetrieb und
- Figur 2: einen schematischen Aufbau einer transportablen Stromversorgungseinheit gemäß Figur 1 im Ladebetrieb.

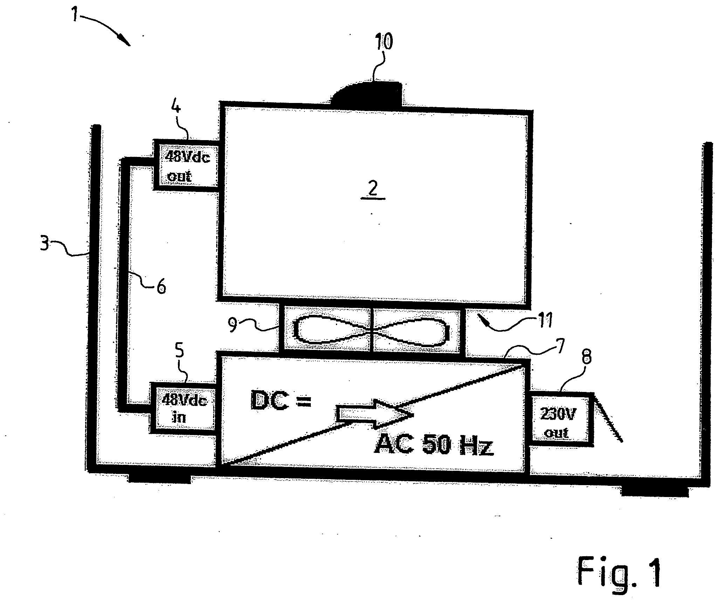

In Figur 1 ist eine transportable Stromversorgungseinheit 1 schematisch dargestellt, wobei ein Akku 2 bzw. aufladbarer elektrischer Speicher 2 in einem Traggestell 3 bzw. Tragrahmen 3 angeordnet ist. Hierbei wird der Speicher 2 bzw. Akku 2 mittels einer Fassung 11 bzw. Halterung 11 werkzeuglos, lösbar verbindbar gehalten/fixiert.

Der Akku 2 weist z.B. eine Spannung von 48Vdc auf, der mittels eines Steckers 4 über ein biegsames, elektrisches Kabel 6 und einem Stecker 5 mit einem Wechselrichter 7 verbunden ist. Im Generatorbetrieb gemäß Figur 1 generiert der Wechselrichter 7 in vorteilhafter Weise eine Netzspannung bzw. Wechselspannung, z.B. 230V bei 50Hz, die an einer Steckerbuchse 8 bzw. einem Anschluss 8 anliegt. An die Steckerbuchse 8 bzw. den Anschluss 8 kann ein entspr. elektrischer Verbraucher angeschlossen bzw. eingesteckt werden.

Ein Lüfter 9 kühlt den Akku 2 und zudem den Wechselrichter 7.

Der Akku 2 weist einen Griff 10 auf, so dass dieser per Hand aus dem Tragrahmen 3 genommen werden kann und durch einen anderen, zweiten Akku 2 ersetzt/ausgetauscht werden kann. Mit Hilfe des biegsamen, relativ langen Kabels 6 und dem/den Steckern 4, 5 kann der Akku 2 ohne großen Aufwand werkzeuglos, lösbar ausgebaut bzw. eingebaut werden.

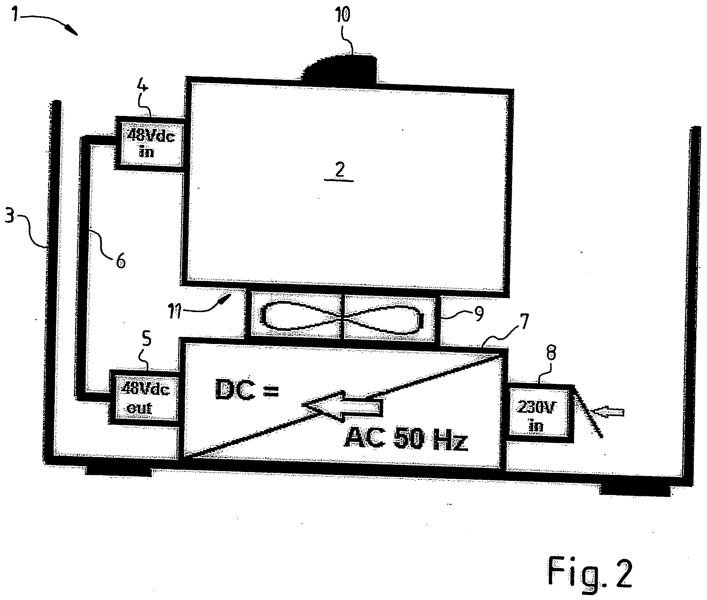

Bei einem Ladebetrieb des Akkus 2 gemäß Figur 2 ist der Wechselrichter 7 als Ladegerät 7 ausgebildet, so dass mittels einer Eingangsspannung bzw. Wechselspannung, z.B. 230V bei 50Hz, eine Ladespannung von z.B. 48Vdc generiert werden kann, so dass der Akku 2 in vorteilhafter Weise geladen werden kann.

## Patentansprüche

1. Transportable Stromversorgungseinheit (1) mit wenigstens einem aufladbaren, elektrischen Speicher (2) zum Speichern von elektrischer Energie und mit einem Gehäuse (3), wobei wenigstens ein Wechselrichter (7) zum Umwandeln einer Gleichspannung des aufladbaren, elektrischen Speichers (2) in eine erste Wechselspannung, insbesondere in eine erste Netzspannung und/oder ersten Drehstrom, und/oder in eine zweite Wechselspannung vorgesehen ist, wobei wenigstens eine Anschlusseinheit (8), insbesondere wenigstens eine Buchse und ein Stecker, für die erste Wechselspannung und/oder für die Netzspannung vorgesehen ist, wobei die Anschlusseinheit (8) als Wechselspannungsausgang (8) des Wechselrichters (7) für die erste Wechselspannung, insbesondere für die Netzspannung, und/oder für die zweite Wechselspannung ausgebildet ist, wobei wenigstens eine lösbar verbindbare Verbindungseinheit (4, 5, 6) für den aufladbaren, elektrischen Speicher (2) vorgesehen ist, wobei die Verbindungseinheit (4, 5, 6) wenigstens eine elektrische Kontaktvorrichtung (4, 5) zum lösbar verbindbaren Kontaktieren des aufladbaren, elektrischen Speichers (2) und wenigstens eine lösbar verbindbare Haltevorrichtung (11) zum lösbar verbindbaren Halten des aufladbaren, elektrischen Speichers (2) im Gehäuse (3) umfasst, **dadurch gekennzeichnet, dass** wenigstens eine Kühleinheit (9) zum Kühlen des aufladbaren, elektrischen Speichers (2) vorgesehen ist und dass die Kühleinheit (9) zugleich als Wechselrichter-Kühleinheit (9) zum Kühlen des Wechselrichters (7) ausgebildet ist, wobei oberhalb des Wechselrichters (7) die Kühleinheit (9) und oberhalb der Kühleinheit (9) der aufladbare, elektrische Speicher (2) angeordnet ist.

2. Stromversorgungseinheit nach Anspruch 1, **dadurch gekennzeichnet, dass** eine elektrische Ladevorrichtung (7) zum Laden des aufladbaren, elektrischen Speichers (2) vorgesehen ist, wobei die Ladevorrichtung (7) wenigstens einen elektrischen und/oder elektronischen Laderegler (7) zum Kontrollieren eines Ladevorganges des aufladbaren, elektrischen Speichers (2) umfasst, wobei der Laderegler (7) als AC/DC-Wandler (7) zum Umwandeln der ersten Wechselspannung in eine Gleichspannung des aufladbaren, elektrischen Speichers (2) ausgebildet ist, wobei die Anschlusseinheit (8) als Wechselspannungseingang (8) des Ladereglers (7) ausgebildet ist.

3. Stromversorgungseinheit nach einem der vorgenannten Ansprüche, **dadurch gekennzeichnet, dass** die Anschlusseinheit (8) wenigstens einen Netzanschluss (8) für die als Netzspannung ausgebildete, erste Wechselspannung und zumindest einen Niedervoltanschluss für die als zweite Wechselspannung aufweist.

4. Stromversorgungseinheit nach einem der vorgenannten Ansprüche, **dadurch gekennzeichnet, dass** die Kühleinheit (9) zugleich als Laderegler-Kühleinheit (9) zum Kühlen des Ladereglers (7) ausgebildet ist.

5. Stromversorgungseinheit nach einem der vorgenannten Ansprüche, **dadurch gekennzeichnet, dass** das Gehäuse (3) wenigstens ein Haltegestell (3) zum Halten des aufladbaren, elektrischen Speichers (2) umfasst.

6. Stromversorgungseinheit nach einem der vorgenannten Ansprüche, **dadurch gekennzeichnet, dass** die elektrische Kontaktvorrichtung (4, 5) wenigstens eine Steckvorrichtung (4, 5) zum Anstecken und Anschließen des aufladbaren, elektrischen Speichers (2) umfasst.

7. Stromversorgungseinheit nach einem der vorgenannten Ansprüche, **dadurch gekennzeichnet, dass** die Steckvorrichtung (4, 5) wenigstens ein Speicher-Anschlusskabel (6) mit einem ersten Anschluss-Stecker (4, 6) oder mit einer ersten Anschluss-Buchse (4, 5) für eine erste Speicher-Buchse (4, 5) oder für einen ersten Speicher-Stecker (4, 5) des aufladbaren, elektrischen Speichers (2) umfasst.

## Claims

1. Transportable power supply unit (1) having at least one chargeable electrical store (2) for storing electrical energy and having a housing (3), wherein at least one inverter (7) is provided to convert a DC voltage of the chargeable electrical store (2) to a first AC voltage, in particular to a first grid voltage and/or first three-phase current, and/or to a second AC voltage, wherein at least one connection unit (8), in particular at least one socket and a plug, is provided for the first AC voltage and/or for the grid voltage, wherein the connection unit (8) is designed as an AC voltage output (8) of the inverter (7) for the first AC voltage, in particular for the grid voltage, and/or for the second AC voltage, wherein at least one releasably connectable connecting unit (4, 5, 6) is provided for the chargeable electrical store (2), wherein the connecting unit (4, 5, 6) comprises at least one electrical contact device (4, 5) for the releasably connectable contact-connection of the chargeable electrical store (2) and at least one releasably connectable holding device (11) for releasably connectably holding the chargeable electrical store (2) in the housing (3), **characterized in that** at least one cooling unit (9) is provided to cool the chargeable electrical store (2) and **in that** the cooling unit (9) is designed simultaneously as an inverter cooling unit (9) for cooling the inverter (7), wherein the cooling unit (9) is arranged above the inverter (7) and the chargeable electrical store (2) is arranged above the cooling unit (9) .

2. Power supply unit according to Claim 1, **characterized in that** an electrical charging device (7) is provided to charge the chargeable electrical store (2), wherein the charging device (7) comprises at least one electrical and/or electronic charging controller (7) for controlling a charging process of the chargeable electrical store (2), wherein the charging controller (7) is designed as an AC/DC converter (7) for converting the first AC voltage to a DC voltage of the chargeable electrical store (2), wherein the connection unit (8) is designed as an AC voltage input (8) of the charging controller (7).

3. Power supply unit according to either of the preceding claims, **characterized in that** the connection unit (8) has at least one grid connection (8) for the first AC voltage in the form of grid voltage and at least one low-voltage connection for the second AC voltage.

4. Power supply unit according to one of the preceding claims, **characterized in that** the cooling unit (9) is simultaneously designed as a charging controller cooling unit (9) for cooling the charging controller (7).

5. Power supply unit according to one of the preceding claims, **characterized in that** the housing (3) comprises at least one holding frame (3) for holding the chargeable electrical store (2).

6. Power supply unit according to one of the preceding claims, **characterized in that** the electrical contact device (4, 5) comprises at least one plug device (4, 5) for plugging and connecting the chargeable electrical store (2).

7. Power supply unit according to one of the preceding claims, **characterized in that** the plug device (4, 5) comprises at least one store connection cable (6) having a first connection plug (4, 6) or having a first connection socket (4, 5) for a first store socket (4, 5) or for a first store plug (4, 5) of the chargeable electrical store (2).

## Revendications

1. Unité d'alimentation électrique portative (1), comprenant au moins un accumulateur électrique rechargeable (2) pour accumuler de l'énergie électrique, et un boîtier (3), dans laquelle au moins un onduleur (7) est prévu pour convertir une tension continue de l'accumulateur électrique rechargeable (2) en une première tension alternative, en particulier en une première tension de réseau et/ou en un premier courant triphasé, et/ou en une deuxième tension alternative, dans laquelle une unité de connexion (8), en particulier au moins une prise et une fiche, est prévue pour la première tension alternative et/ou pour la tension de réseau, dans laquelle l'unité de connexion (8) est réalisée sous la forme d'une sortie de tension alternative (8) de l'onduleur (7) pour la première tension alternative, en particulier pour la tension de réseau, et/ou pour la deuxième tension alternative, dans laquelle au moins une unité de connexion (4, 5, 6) pouvant être connectée de manière amovible est prévue pour l'accumulateur électrique rechargeable (2), dans laquelle l'unité de connexion (4, 5, 6) comprend au moins un dispositif de contact électrique (4, 5) pour la mise en contact pouvant être connectée de manière amovible de l'accumulateur électrique rechargeable (2), et au moins un dispositif de retenue (11) pouvant être connecté de manière amovible pour la retenue pouvant être connectée de manière amovible de l'accumulateur électrique rechargeable (2) dans le boîtier (3),
**caractérisée en ce qu'**au moins une unité de refroidissement (9) est prévue pour refroidir l'accumulateur électrique rechargeable (2), et **en ce que** l'unité de refroidissement (9) est en même temps réalisée sous la forme d'une unité de refroidissement d'onduleur (9) pour refroidir l'onduleur (7), l'unité de refroidissement (9) étant disposée au-dessus de l'onduleur (7), et l'accumulateur électrique rechargeable (2) étant disposé au-dessus de l'unité de refroidissement (9).

2. Unité d'alimentation électrique selon la revendication 1, **caractérisée en ce qu'**un dispositif de chargement électrique (7) est prévu pour charger l'accumulateur électrique rechargeable (2), dans laquelle le dispositif de chargement (7) comprend au moins un régulateur de charge électrique et/ou électronique (7) pour contrôler un processus de charge de l'accumulateur électrique rechargeable (2), dans laquelle le régulateur de charge (7) est réalisé sous la forme d'un convertisseur CA/CC (7) pour convertir la première tension alternative en une tension continue de l'accumulateur électrique rechargeable (2), l'unité de connexion (8) étant réalisée sous la forme d'une entrée de tension alternative (8) du régulateur de charge (7).

3. Unité d'alimentation électrique selon l'une quelconque des revendications précédentes, **caractérisée en ce que** l'unité de connexion (8) présente au moins une connexion de réseau (8) pour la première tension alternative réalisée sous forme de tension de réseau, et au moins une connexion basse tension pour la deuxième tension alternative.

4. Unité d'alimentation électrique selon l'une quelconque des revendications précédentes, **caractérisée en ce que** l'unité de refroidissement (9) est réalisée en même temps sous la forme d'une unité de refroidissement de régulateur de charge (9) pour refroidir le régulateur de charge (7).

5. Unité d'alimentation électrique selon l'une quelconque des revendications précédentes, **caractérisée en ce que** le boîtier (3) comprend au moins un support de retenue (3) pour retenir l'accumulateur électrique rechargeable (2).

6. Unité d'alimentation électrique selon l'une quelconque des revendications précédentes, **caractérisée en ce que** le dispositif de contact électrique (4, 5) comprend au moins un dispositif d'enfichage (4, 5) pour l'enfichage et la connexion de l'accumulateur électrique rechargeable (2).

7. Unité d'alimentation électrique selon l'une quelconque des revendications précédentes, **caractérisée en ce que** le dispositif d'enfichage (4, 5) comprend au moins un câble de connexion d'accumulateur (6) pourvu d'une première fiche de connexion (4, 6) ou d'une première prise de connexion (4, 5) pour une première prise d'accumulateur (4, 5) ou pour une première fiche d'accumulateur (4, 5) de l'accumulateur électrique rechargeable (2).
